# EUROPEAN PATENT APPLICATION

(11) **EP 4 744 785 A1**
(43) Date of publication of application: **20.05.2026**
(21) Application number: 25822322.1
(22) Date of filing: 05.06.2025
(51) Int. Cl.: B05C 5/02, B05C 11/10, H01M 4/04, H01M 10/42

(54) **COATING APPARATUS**

(30) Priority: 10.06.2024 KR 20240074989
(71) Applicant: LG Energy Solution, Ltd., Seoul 07335 (KR)
(72) Inventor: KIM, Guk Tae, Daejeon 34122 (KR); CHOI, Min Hyuck, Daejeon 34122 (KR); KIM, Min Cheol, Daejeon 34122 (KR); PARK, Min Gu, Daejeon 34122 (KR); MOON, Young Gyu, Daejeon 34122 (KR)
(74) Representative: Plasseraud IP
(86) International application number: PCT/KR2025/007685
(87) International publication number: WO 2025/258913

(57) **Abstract**

A coating apparatus including a coating die with a manifold for accommodating a first coating liquid is provided. The coating die includes a die lip with a discharge port for discharging the first coating liquid, and a coating shim disposed within the coating die. The coating shim includes a body shim with a center body spaced apart from the die lip by the manifold. A first side body of the coating shim extends from the center body toward the die lip, and the first side body does not overlap the manifold. A first spacer shim extends between the center body and the die lip. The first spacer shim includes an inner part overlapping the manifold and an outer part located between the manifold and the first side body.

## Description

### [Cross-Reference to Related Applications]

The present application is a national phase entry under 35 U.S.C. § 371 of International Application No. PCT/KR2025/007685 filed June 5, 2025, which claims priority from Korean Patent Application No. 10-2024-0074989 filed June 10, 2024, all of which are incorporated herein by reference.

### [Technical Field]

The present disclosure relates to a coating apparatus.

### [Background]

With the increasing development and demand for mobile apparatuses, the demand for secondary batteries as energy sources is rapidly growing. These secondary batteries include an electrode assembly. The electrode assembly has a form where a positive electrode, a separator, and a negative electrode are laminated at least once, and the positive electrode and negative electrode are manufactured by coating a coating liquid onto current collectors made of aluminum foil and copper foil, respectively. The coating liquid may include an insulating solution applied onto the current collector to cover both sides of the electrode slurry (positive electrode active material slurry or negative electrode active material slurry) and/or the electrode slurry applied onto the current collector.

### [Brief Description]

### [Technical Problem]

The technical problem to be solved by the present disclosure is to provide a coating apparatus.

### [Technical Solution]

To solve the aforementioned problem, the technical concept of the present disclosure provides a coating apparatus including: a coating die including a manifold for accommodating a first coating liquid and a die lip having a discharge port for discharging the first coating liquid; and a coating shim disposed within the coating die, wherein the coating shim includes: a body shim including a center body spaced from the die lip by the manifold, and a first side body extending from the center body toward the die lip, wherein the first side body is not overlapping the manifold; and a first spacer shim extending between the center body and the die lip, wherein the first spacer shim includes an inner part overlapping the manifold and an outer part located between the manifold and the first side body.

In aspects, the first spacer shim includes a flow path for conveying a second coating liquid.

In aspects, the coating die further includes an internal flow path for conveying the second coating liquid provided from outside into the flow path of the first spacer shim.

In aspects, the first coating liquid is an electrode slurry, and the second coating liquid is an insulating liquid.

In aspects, the coating apparatus further includes a bolt configured to fasten the first spacer shim to the coating die, wherein the first spacer shim includes a first hole into which the bolt is inserted, and the length of the first spacer shim along the first direction of the first hole is greater than the length of the first spacer shim along the second direction of the first hole, wherein the first direction is parallel to the discharge direction of the first coating liquid, and the second direction is perpendicular to the first direction.

In aspects, the coating apparatus further includes a fixing pin configured to fix the first spacer shim to the coating die, wherein the first spacer shim includes a second hole into which the fixing pin is inserted, and the length of the first spacer shim along the first direction of the second hole is greater than the length of the first spacer shim along the second direction of the second hole, wherein the first direction is parallel to the discharge direction of the first coating liquid, and the second direction is perpendicular to the first direction.

In aspects, the center body includes a groove, the first spacer shim includes a rear end part within the groove of the center body, and the second hole of the first spacer shim is provided in the rear end part of the first spacer shim.

In aspects, the first spacer shim is spaced apart from the first side body.

In aspects, the body shim further includes a second side body spaced apart from the first side body by the manifold, the coating shim further includes a second spacer shim extending between the center body and the die lip, and the second spacer shim includes an inner part overlapping the manifold and an outer part located between the manifold and the second side body.

In aspects, the distance between the first spacer shim and the second spacer shim is smaller than the width of the manifold.

In aspects, the first spacer shim and the second spacer shim each include a flow path for conveying a second coating liquid.

In aspects, the coating shim is provided between the first spacer shim and the second spacer shim, and further includes a flow path for conveying the first coating liquid between the manifold and the discharge port of the coating die.

In aspects, the first spacer shim is spaced apart from the first side body, and the second spacer shim is spaced apart from the second side body.

In aspects, the coating die includes: a first block having the manifold; and a second block coupled to the first block, wherein the coating shim is provided between the first block and the second block.

### [Advantageous Effects]

According to aspects of the present disclosure, since the edge part of the manifold is covered by the spacer shim, leakage of the electrode slurry through the gap between the body shim and the spacer shim can be prevented. By preventing leakage of the electrode slurry, internal contamination of the coating die can be prevented and the reliability of the coating process can be improved.

According to aspects of the present disclosure, the hole in the spacer shim is configured as a slot hole extended in a first direction (e.g., X-direction), enabling precise adjustment of the offset distance between the end of the spacer shim and the die lip of the coating die. By adjusting this offset distance, the coating width of the electrode slurry layer and insulating layer applied on the substrate can be controlled.

The effects that can be obtained from the aspects of the present disclosure are not limited to the effects mentioned above, and other effects not mentioned can be clearly derived and understood by one having ordinary knowledge in the technical field to which the aspects of the present disclosure belong from the following description. In other words, unintended effects of practicing the aspects of the present disclosure can also be derived from the aspects of the present disclosure by one having ordinary knowledge in the technical field.

### [Brief Description of the Drawings]

FIG. 1 is a perspective view showing a coating apparatus according to aspects of the present disclosure.
FIG. 2 is an exploded perspective view showing a coating apparatus according to aspects of the present disclosure.
FIG. 3 is a cross-sectional view showing a coating apparatus according to aspects of the present disclosure.
FIG. 4 is a plan view showing a portion of the coating apparatus according to aspects of the present disclosure.
FIG. 5 is a cross-sectional view taken along lines A1-A1' and B1-B1' of FIG. 4.
FIG. 6 is a plan view showing a portion of a coating apparatus according to aspects of the present disclosure.
FIG. 7 is a cross-sectional view taken along lines A2-A2' and B2-B2' of FIG. 6.

### [Detailed Description]

Hereinafter, aspects of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the aspects described herein and the configurations shown in the drawings are only aspects of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the aspects of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First aspect)

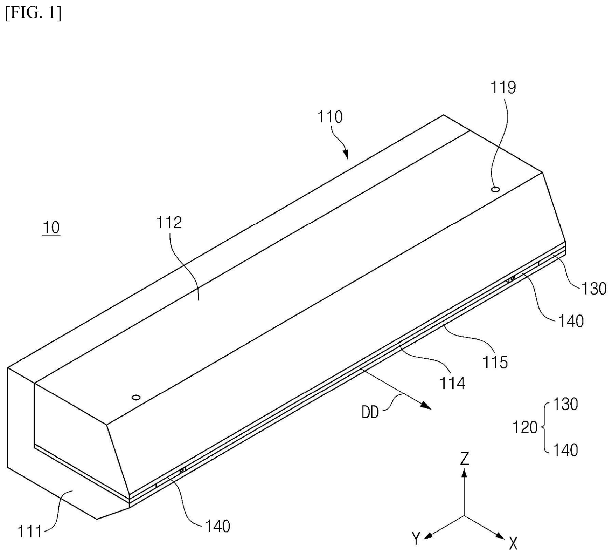

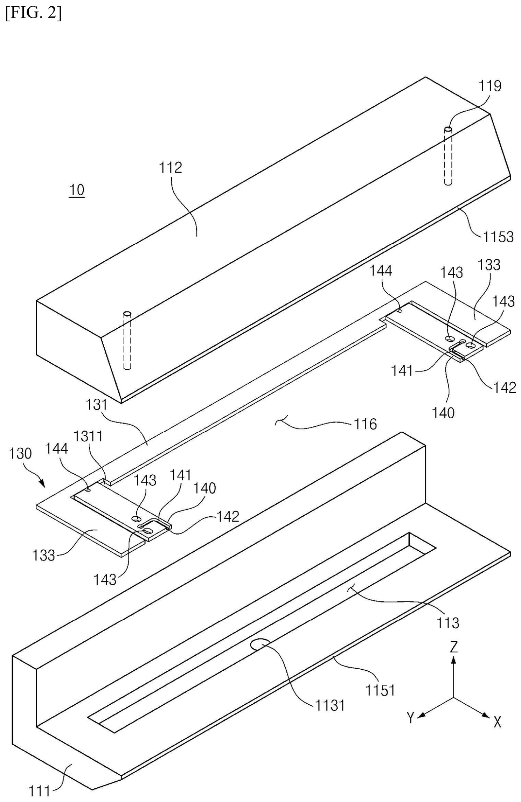

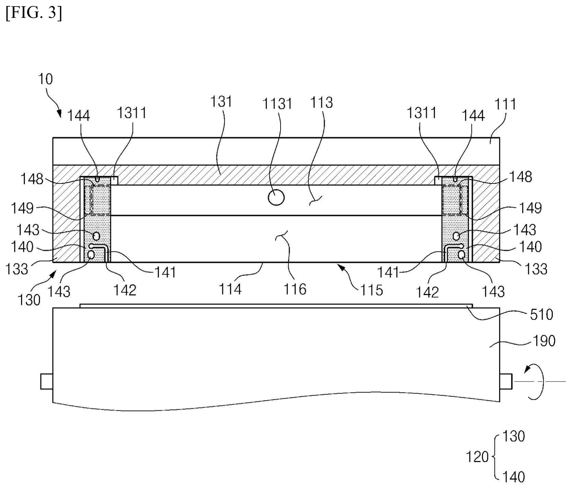

FIG. 1 is a perspective view showing a coating apparatus 10 according to aspects of the present disclosure. FIG. 2 is an exploded perspective view showing a coating apparatus 10 according to aspects of the present disclosure. FIG. 3 is a cross-sectional view showing a coating apparatus 10 according to aspects of the present disclosure.

Referring to FIGS. 1 through 3, the coating apparatus 10 can perform a coating process to manufacture electrodes for secondary batteries by applying a coating liquid onto a substrate 510. The coating liquid may include an electrode slurry and an insulating liquid. The coating apparatus 10 can discharge the electrode slurry and insulating liquid toward the substrate 510 moving by the coating roll 190. The electrode slurry applied onto the substrate 510 becomes an electrode slurry layer, and the insulating liquid applied onto the substrate 510 can become an insulating layer covering the side parts of the electrode slurry layer. In this disclosure, the electrode slurry may be referred to as a first coating liquid, and the insulating liquid may be referred to as a second coating liquid.

The substrate 510 may be a current collector. The current collector may be a positive electrode current collector. For example, the positive electrode current collector may include stainless steel, aluminum, nickel, titanium, sintered carbon, etc. The current collector may be a negative electrode current collector. For example, the negative electrode current collector may include copper, stainless steel, nickel, titanium, sintered carbon, etc.

The electrode slurry may include an electrode active material, a conductive material, a binder, and additives. The electrode active material may include a positive electrode active material or a negative electrode active material. For example, the positive electrode active material may include a lithium metal composite oxide containing nickel (Ni), cobalt (Co), and manganese (Mn). For example, the negative electrode active material may include one or more of a carbon material and a silicon material. The carbon material may refer to a carbon material having carbon atoms as its main component. The silicon material may be a particle containing silicon (Si) as its main component among metal components, and may include one or more of silicon (Si) particles and silicon oxide particles.

The insulating liquid may include inorganic particles, phenolic compounds, and a binder. For example, the inorganic particles may include one or more aluminum minerals selected from boehmite, gibbsite, diaspore, alunite, and nepheline. For example, the phenolic particles may enhance the dispersibility of the inorganic particles contained in the insulating liquid. Such phenolic compounds may include one or more among tannic acid, baicalein, luteolin, taxifolin, myricetin, quercetin, rutin, catechin, epigallocatechin gallate, butein, piceatannol, pyrogallic acid, ellagic acid, amylose, amylopectin, and xanthan gum.

In aspects, the coating apparatus 10 may be configured to simultaneously apply the electrode slurry and the insulating liquid onto one surface of the substrate 510. The insulating liquid may be applied onto the substrate 510 to cover both sides of the electrode slurry applied onto the substrate 510. Applying the insulating liquid onto the substrate 510 to cover both sides of the electrode slurry layer can suppress or prevent the sliding phenomenon where the thickness of the electrode slurry layer gradually decreases at its outer periphery, and can reduce thickness deviations in the electrode slurry layer applied onto the substrate 510.

The coating apparatus 10 may include a coating die 110, a coating shim 120, and a coating roll 190.

The coating die 110 can receive electrode slurry and insulating liquid from an external source and discharge the electrode slurry and insulating liquid toward the substrate 510. The coating die 110 may include a discharge port 114 configured to discharge the electrode slurry and insulating liquid. Hereinafter, the first direction (e.g., X-direction) is defined as a direction parallel to the discharge direction DD of the electrode slurry, the second direction (e.g., Y-direction) is defined as a direction perpendicular to the discharge direction DD of the electrode slurry, and the third direction (e.g., Z-direction) is defined as a direction perpendicular to both the first direction (e.g., X-direction) and the second direction (e.g., Y-direction).

The discharge port 114 of the coating die 110 may have a slit shape extending in the second direction (e.g., Y-direction). The length of the discharge port 114 of the coating die 110 in the second direction (e.g., Y-direction) may be greater than the length of the discharge port 114 of the coating die 110 in the third direction (e.g., Z-direction). The discharge port 114 of the coating die 110 may be provided on a die lip 115 of the coating die 110 facing a substrate 510 supported on a coating roll 190.

The coating die 110 may include a first block 111 and a second block 112. The first block 111 may include a manifold 113 for accommodating the electrode slurry. The manifold 113 may include a space for accommodating the electrode slurry injected through the electrode slurry inject port 1131. The second block 112 may be coupled to the first block 111 to cover the manifold 113 of the first block 111. The die lip 115 of the coating die 110 may include a die lip 1151 of the first block 111 at an end of the first block 111 and a die lip 1153 of the second block 112 at an end of the second block 112. The discharge port 114 may be provided between the die lip 1151 of the first block 111 and the die lip 1153 of the second block 112.

A coating shim 120 may be disposed within the coating die 110. The coating shim 120 may be inserted into a space provided between the first block 111 and the second block 112. The coating shim 120 may provide an electrode slurry flow path 116 extending in a first direction (e.g., X-direction) from the manifold 113 of the coating die 110 to the discharge port 114 of the coating die 110. The electrode slurry flow path 116 may convey electrode slurry from the manifold 113 of the coating die 110 to the discharge port 114 of the coating die 110.

The coating shim 120 may include a body shim 130 and a spacer shim 140.

The body shim 130 may be fastened to at least one of the first block 111 and the second block 112 by a fastening member such as a bolt. The body shim 130 may include a center body 131 and a pair of side bodies 133. The center body 131 may be disposed on one side of the manifold 113 and spaced apart from the discharge port 114 of the coating die 110 in a first direction (e.g., X-direction) with the manifold 113 interposed therebetween. The center body 131 may extend along one edge of the manifold 113 in the width direction of the manifold 113 (e.g., Y-direction). The pair of side bodies 133 may be spaced apart in the width direction of the manifold 113 (e.g., Y-direction) with the manifold 113 between them. One of the pair of side bodies 133 may be connected to one end of the center body 131, and may extend in a first direction (e.g., X-direction) from the center body 131 toward the die lip 115 of the coating die 110. The other of the pair of side bodies 133 may be connected to the other end of the center body 131 and may extend from the center body 131 toward the die lip 115 of the coating die 110 in a first direction (e.g., X-direction). The pair of side bodies 133 may not overlap the manifold 113 in a third direction (e.g., Z-direction). That is, the pair of side bodies 133 may not cover the manifold 113. In this disclosure, one of the pair of side bodies 133 may be referred to as the first side body, and the other of the pair of side bodies 133 may be referred to as the second side body.

The spacer shim 140 may be fastened to at least one of the first block 111 and the second block 112 by a fastening member such as a bolt. The spacer shim 140 may discharge the insulating liquid toward the substrate 510. The spacer shim 140 may discharge the insulating liquid in a direction substantially parallel to the discharge direction DD of the electrode slurry. The spacer shim 140 may include an insulating liquid discharge port 142 configured to discharge the insulating liquid and an insulating liquid flow path 141 extending from the insulating liquid discharge port 142. For example, the insulating liquid discharged from the insulating liquid discharge port 142 of the spacer shim 140 may be discharged outside the coating die 110 through the discharge port 114 of the coating die 110. The second block 112 of the coating die 110 may have an internal flow path 119 communicating with the insulating liquid flow path 141 of the spacer shim 140. Insulating liquid supplied from outside can be delivered to the insulating liquid flow path 141 of the spacer shim 140 through the internal flow path 119 of the second block 112. The spacer shim 140 may be disposed between the manifold 113 and the die lip 115 of the coating die 110. The spacer shim 140 may define the width of the electrode slurry flow path 116 of the coating shim 120 relative to the second direction (e.g., Y-direction).

The coating apparatus 10 may include a plurality of spacer shims 140 mounted on the coating die 110. The plurality of spacer shims 140 may be spaced apart from each other in the second direction (e.g., Y-direction). In aspects, a spacer shim 140 may be disposed on each side of the electrode slurry flow path 116 of the coating shim 120. In aspects, one of the two spacer shims 140 may be disposed on one side of one of a pair of side bodies 133 of the body shim 130, and the other of the two spacer shims 140 may be disposed on one side of the other of the pair of body shims 130. The two spacer shims 140 each have a portion overlapping the manifold 113, and the distance between the two spacer shims 140 along the width direction (e.g., Y-direction) of the manifold 113 may be less than the width of the manifold 113. The spacer shim 140 may include an inner part 148 overlapping the manifold 113 in a third direction (e.g., Z-direction) at the edge part of the manifold 113, and an outer part 149 not overlapping the manifold 113 in the third direction (e.g., Z-direction). The inner part 148 of the spacer shim 140 may cover the edge part of the manifold 113. The outer part 149 of the spacer shim 140 may be positioned between the manifold 113 and the side body 133 corresponding to the end of the manifold 113 in the width direction of the manifold 113. When the manifold 113 includes a first edge part and a second edge part opposite each other in the width direction of the manifold 113, one of the spacer shims 140 may cover the first edge part of the manifold 113, and another of the spacer shims 140 may cover the second edge part of the manifold 113.

In the coating apparatus according to the comparative example, the boundary between the body shim and the spacer shim may be located on top of the manifold or between the manifold and the die lip. In this case, there is a risk that the electrode slurry supplied from the manifold may leak into the gap between the body shim and the spacer shim. Such leakage of the electrode slurry can cause internal contamination of the coating die and reduce the reliability of the coating process.

According to aspects of the present disclosure, since the edge part of the manifold 113 is covered by the spacer shim 140, leakage of the electrode slurry into the gap between the body shim 130 and the spacer shim 140 can be prevented. Preventing leakage of the electrode slurry prevents internal contamination of the coating die 110 and improves the reliability of the coating process.

The width range of the inner part 148 of the spacer shim 140 in the second direction (e.g., Y-direction) may be several to tens of millimeters. In aspects, the width range of the outer part 149 of the spacer shim 140 in the second direction (e.g., Y-direction) may be several to tens of millimeters.

In aspects, the spacer shim 140 may be spaced apart from the side body 133 of the coating shim 120 in the width direction of the manifold 113. For example, the spacer shim 140 may be spaced apart from the side body 133 of the coating shim 120, forming a space between the spacer shim 140 and the side body 133 of the coating shim 120. In aspects, the space provided between the spacer shim 140 and the side body 133 of the coating shim 120 does not communicate with the manifold 113 or the flow space of the electrode slurry, thereby preventing leakage of the electrode slurry regardless of whether the spacer shim 140 and the coating shim 120 are in close contact with each other. According to the aspects, since it is not required to tightly fit the spacer shim 140 to the side body 133 of the coating shim 120 to suppress leakage of the electrode slurry, the manufacturing cost of the spacer shim 140, which requires precision machining, can be reduced.

### (Second aspect)

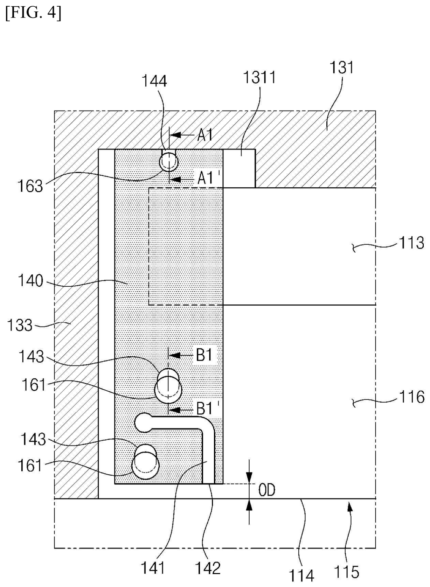

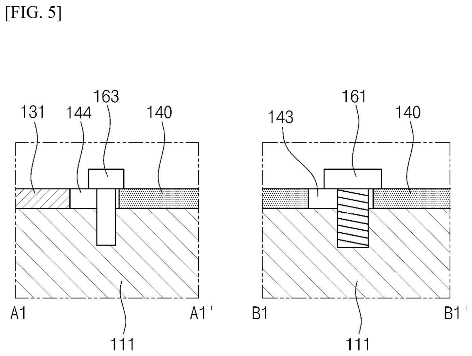

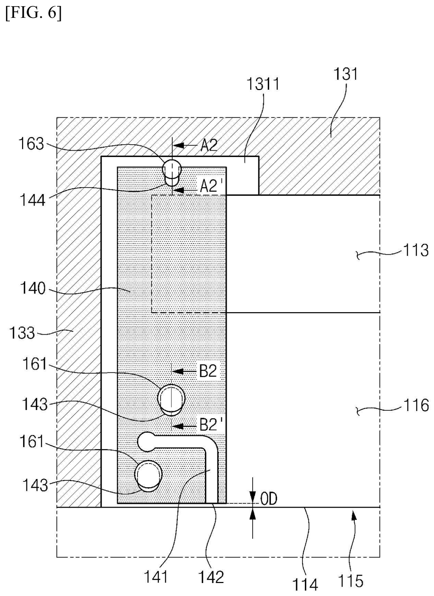

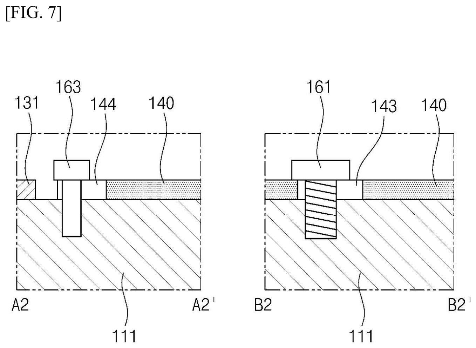

FIG. 4 is a plan view showing a portion of the coating apparatus 10 according to aspects of the present disclosure. FIG. 5 is a cross-sectional view taken along lines A1-A1' and B1-B1' of FIG. 4. FIG. 6 is a plan view showing a portion of the coating apparatus 10 according to aspects of the present disclosure. FIG. 7 is a cross-sectional view taken along lines A2-A2' and B2-B2' of FIG. 6.

Referring to FIGS. 4 through 7 together with FIGS. 1 through 3, the spacer shim 140 can be fastened and fixed to the first block 111 and/or the second block 112 by bolts 161 and fixing pins 163.

In aspects, the spacer shim 140 may be fastened and fixed to the first block 111 by bolts 161 and fixing pins 163. The spacer shim 140 may include a first hole 143 into which the bolt 161 is inserted and a second hole 144 into which the fixing pin 163 is inserted. The first hole 143 may be aligned with a hole in the first block 111, and the second hole 144 may be aligned with a hole in the first block 111. The bolt 161 may be inserted and fastened through the first hole 143 of the spacer shim 140 into the hole in the first block 111. The outer surface of the bolt 161 may have threads that engage with threads provided on the inner surface of the hole in the first block 111. The fixing pin 163 can be inserted into the hole in the first block 111 through the second hole 144 of the spacer shim 140. When mounting the spacer shim 140 onto the first block 111, after aligning and fixing the spacer shim 140 at the target position using the fixing pin 163, the spacer shim 140 can be fastened to the first block 111 using the bolt 161.

In aspects, the first hole 143 of the spacer shim 140 may be disposed around the insulating liquid flow path 141. In aspects, the spacer shim 140 may include two first holes 143 spaced apart by the insulating liquid flow path 141, and a bolt 161 may be inserted into each of the two first holes 143 of the spacer shim 140. In aspects, one of the two bolts 161 may be configured to fasten the spacer shim 140 to the first block 111, and the other of the two bolts 161 may be configured to fasten the spacer shim 140, the first block 111, and the second block 112 to each other. By disposing a plurality of bolts 161 near the insulating liquid flow path 141 of the spacer shim 140, deformation of the spacer shim 140 due to pressure formed while insulating liquid flows through the insulating liquid flow path 141 of the spacer shim 140 can be suppressed.

In aspects, the second hole 144 of the spacer shim 140 may be disposed at the rear end part of the spacer shim 140 adjacent to the center body 131 of the body shim 130. When viewed in a plane, the second hole 144 of the spacer shim 140 may extend in a first direction (e.g., X-direction) from an edge of the spacer shim 140 facing the center body 131 of the body shim 130.

In aspects, the center body 131 of the body shim 130 may include a groove 1311 extending away from the manifold 113. The rear end part of the spacer shim 140, provided with a second hole 144 into which the fixing pin 163 is inserted, may be located within the groove 1311 of the center body 131 of the body shim 130. In this case, the fixing pin 163 and the second hole 144 of the spacer shim 140 may be located within the groove 1311 of the center body 131 and between the manifold 113 and the side surface of the center body 131 defining the groove 1311.

In aspects, the first hole 143 and second hole 144 of the spacer shim 140 may each be a slot hole having a long axis parallel to a first direction (e.g., X-direction) and a short axis parallel to a second direction (e.g., Y-direction). That is, the length of the first hole 143 along the first direction (e.g., X-direction) may be greater than the length of the first hole 143 along the second direction (e.g., Y-direction), and the length of the second hole 144 along the first direction (e.g., X-direction) may be greater than the length of the second hole 144 along the second direction (e.g., Y-direction). When the first hole 143 and second hole 144 of the spacer shim 140 are slot holes, the offset distance OD between the end of the spacer shim 140 and the die lip 115 of the coating die 110 can be adjusted by adjusting the relative position between the bolt 161 and the first hole 143 and the relative position between the fixing pin 163 and the second hole 144. According to aspects of the present disclosure, the offset distance OD between the end of the spacer shim 140 and the die lip 115 of the coating die 110 can be precisely adjusted.

The hole in the spacer shim 140 into which the fastening member or fixing member is inserted may be either a slot hole having a long axis in a first direction (e.g., X-direction) or a slot hole having a long axis in a second direction (e.g., Y-direction). If the hole in the spacer shim 140 is a slot hole with long axis in the first direction (e.g., X-direction), the position of the spacer shim 140 along the first direction (e.g., X-direction) can be adjusted. If the hole in the spacer shim 140 is a slot hole with its long axis in a second direction (e.g., Y-direction), the position of the spacer shim 140 relative to the second direction (e.g., Y-direction) can be adjusted.

According to aspects of the present disclosure, the space provided between the spacer shim 140 and the side body 133 of the coating shim 120 does not communicate with the manifold 113 or the electrode slurry flow space. Therefore, regardless of whether the spacer shim 140 and the side bodies 133 of the coating shim 120 are in close contact, leakage of the electrode slurry can be prevented, and adjustment of the position of the spacer shim 140 in a second direction (e.g., Y-direction) is not required. Since there is no need to configure the hole in the spacer shim 140 as a slot hole extended in the second direction (e.g., Y-direction), the hole in the spacer shim 140 can be configured as a slot hole extended in the first direction (e.g., X-direction). Therefore, according to the aspects, the hole in the spacer shim 140 can be configured as a slot hole extended in the first direction (e.g., X-direction) to precisely adjust the offset distance OD between the end of the spacer shim 140 and the die lip 115 of the coating die 110. Adjusting the offset distance OD allows control over the coating width of the electrode slurry layer and insulating layer applied on the substrate 510.

The present disclosure has been described in detail above with reference to the drawings and aspects. However, the configurations described in the drawings or aspects of the present specification are merely one aspect of the present disclosure and do not represent all of the technical ideas of the present disclosure. Therefore, it should be understood that various equivalents and modifications may be made to the present disclosure at the time of filing this application.

## Claims

1. A coating apparatus comprising:
a coating die including a manifold configured to accommodate a first coating liquid, and a die lip having a discharge port configured to discharge the first coating liquid; and
a coating shim disposed within the coating die,
wherein the coating shim includes a body shim with a center body spaced apart from the die lip with the manifold positioned between the center body and die lip, a first side body extending from the center body toward the die lip, and a first spacer shim extending between the center body and the die lip,
wherein the first side body does not overlap the manifold, and
wherein the first spacer shim includes an inner part overlapping the manifold and an outer part located between the manifold and the first side body.

2. The coating apparatus of claim 1, wherein
the first spacer shim includes a spacer flow path configured to convey a second coating liquid.

3. The coating apparatus of claim 2, wherein
the coating die further includes an internal flow path configured to convey the second coating liquid from outside the coating die to the spacer flow path of the first spacer shim.

4. The coating apparatus of claim 2,
wherein the first coating liquid is an electrode slurry, and
the second coating liquid is an insulating liquid.

5. The coating apparatus of claim 1, further comprising:
a bolt configured to fasten the first spacer shim to the coating die,
wherein the first spacer shim includes a first hole configured to receive the bolt, and
wherein a length of the first hole along a first axis is greater than a length of the first hole along a second axis, wherein the first axis is parallel to a discharge direction of the first coating liquid, and the second axis is perpendicular to the first axis.

6. The coating apparatus of claim 1, further comprising:
a fixing pin configured to fasten the first spacer shim to the coating die,
wherein the first spacer shim includes a second hole configured to receive the fixing pin, and
wherein a length of the second hole along a first axis is greater than a length of the second hole along a second axis, wherein the first axis is parallel to a discharge direction of the first coating liquid, and the second axis is perpendicular to the first axis.

7. The coating apparatus of claim 6,
wherein the center body includes a groove,
wherein the first spacer shim includes a rear end part within the groove of the center body, and
wherein the second hole of the first spacer shim is located in the rear end part of the first spacer shim.

8. The coating apparatus of claim 1,
wherein the first spacer shim is spaced apart from the first side body.

9. The coating apparatus of claim 1,
wherein the body shim further includes a second side body spaced apart from the first side body with the manifold between the second side body and the first side body,
wherein the coating shim further includes a second spacer shim extending between the center body and the die lip, and
wherein the second spacer shim includes an inner part overlapping the manifold and an outer part located between the manifold and the second side body.

10. The coating apparatus of claim 9, wherein a distance between the first spacer shim and the second spacer shim is less than a width of the manifold along a first axis parallel to a discharge direction of the first coating liquid.

11. The coating apparatus of claim 9,
wherein the first spacer shim and the second spacer shim each include a spacer flow path configured to convey a second coating liquid.

12. The coating apparatus of claim 9,
wherein the coating shim includes a shim flow path located between the first spacer shim and the second spacer shim and further located between the manifold and the discharge port of the coating die, and
wherein the shim flow path is configured to convey the first coating liquid.

13. The coating apparatus of claim 9,
wherein the first spacer shim is spaced apart from the first side body, and
the second spacer shim is spaced apart from the second side body.

14. The coating apparatus of claim 1,
wherein the coating die includes:
a first block having the manifold; and
a second block coupled to the first block, and
wherein the coating shim is located between the first block and the second block.
